# EUROPEAN PATENT SPECIFICATION

(11) **EP 3 754 818 B1**
(45) Date of publication and mention of the grant of the patent: **24.08.2022**
(21) Application number: 19181405.2
(22) Date of filing: 20.06.2019
(51) Int. Cl.: H02K 5/20, H02K 15/14, H02K 9/00

(54) **A FRAME OF AN ELECTRIC MACHINE**
RAHMEN EINER ELEKTRISCHEN MASCHINE
CARCASSE D'UNE MACHINE ÉLECTRIQUE

(43) Date of publication of application: 23.12.2020
(73) Proprietor: ABB Schweiz AG, 5400 Baden (CH)
(72) Inventor: Ikäheimo, Jouni, 65320 Vaasa (FI)
(74) Representative: Kolster Oy Ab

(56) References cited:
- US-A1- 2010 007 227

## Description

### FIELD

The invention relates to a frame of an electric machine.

Electric machines i.e. electric motors and electric generators are used in many applications. Electric motors are used to drive different kinds of machines and electric generators are used to produce electric power.

An electric machine may comprise a rotating shaft, a rotor on the shaft, a stationary stator and a frame. The rotor may be provided with a rotor winding e.g. a squirrel cage or with permanent magnets. The stator may comprise a stator core with a stator winding.

The shaft may be supported via bearings on end plates, said end plates being attached to the frame.

The electric machine may be cooled with liquid e.g. water passing in cooling ducts in the frame.

Water cooled frames have traditionally been manufactured by casting or by using a welded construction. Steel tubes have been embedded in the casting to provide a flow channel for the cooling media. These manufacturing methods might not be the most cost effective especially for smaller electric machines. This is due to the high amount of manual work and/or the high tooling costs. This applies e.g. to electric machines being smaller than IEC 250 i.e. a standard prepared by the International Electrotechnical Commission (IEC) for the frame size of electric machines. The electric machine is in this standard standardized in view of essential parameters of the electric machine.

The frame could be made e.g. from an extruded tubular profile with integrated water cooling channels, whereby the problem of investing in a new tool for different lengths of the electric machine would be solved. This is due to the fact that the extruded tubular profile may be cut to any desired length. The tooling costs for each separate inner diameter would, however, still remain.

US 2010/0007227 discloses a cooling jacket for a drive motor. The cooling jacket includes an extruded jacket body having an outer peripheral surface, an inner peripheral surface, and a plurality of discrete cooling passages located between the inner and the outer peripheral surfaces that provided multi-directional fluid flow. A fluid inlet is provided to direct cooling fluid into the jacket body and a fluid outlet to direct heated fluid awai from the jacket body.

### SUMMARY

An object of the present invention is to achieve an improved frame of an electric machine.

The method for producing a frame of an electric machine according to the invention is defined in claim 1.

The method comprises
producing frame modules having an arc-shaped inner surface, the frame modules extending in the axial direction over a length of the frame and in the circumferential direction over a portion of the circumference of the frame, each frame module comprising at least one axial cooling duct passing in the axial direction through the frame module,
determining the IEC frame number to be produced,
determining N, where N = 8 for a frame size IEC 160, N = 9 for a frame size IEC 180 and N = 10 for a frame size IEC 200, etc...,
positioning N identical frame modules adjacent to each other so that the arc-shaped inner surface of the frame module seats on an inner circumference of the frame,
welding adjacent frame modules to each other from the edges of the frame modules by welding the opposite side edges, in the circumferential direction, of adjacent frame modules together along the axial length of the side edges of the frame modules in order to form a continuous circular frame,
machining an inner surface of the frame in order to achieve a circular inner opening of a desired diameter in the frame,
whereby an inner diameter of the frame is determined according to the following equation D = 20 * N and wherein an arc-length of the arc-shaped inner surface of the frame module is π * 20 mm.

The use of a modular frame construction according to the invention eliminates the need for a specific tooling for each separate inner diameter.

The invention makes it possible to use one simple inexpensive extrusion tool in order to manufacture the frame module with the at least one axial cooling duct. The use of the frame module makes it possible to manufacture a frame of a desired length and with a desired diameter. The frame module or the complete frame comprising several frame modules may easily be cut to a desired length. A desired frame in accordance with the corresponding IEC standard may easily be achieved by varying the number of frame modules used in the frame.

The electric machine may be a liquid cooled electric machine. The liquid may be e.g. water or oil.

### DRAWINGS

In the following the invention will be described in greater detail by means of preferred embodiments with reference to the attached drawings, in which
Figure 1 shows a side view of an electric machine,
Figure 2 shows an axonometric view of an electric machine,
Figure 3 shows a transverse cross section of a frame of an electric machine.

### DETAILED DESCRIPTION

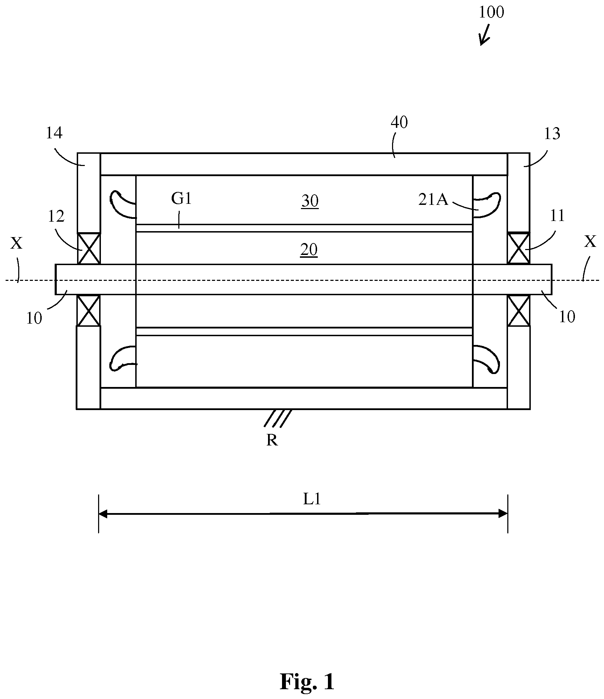

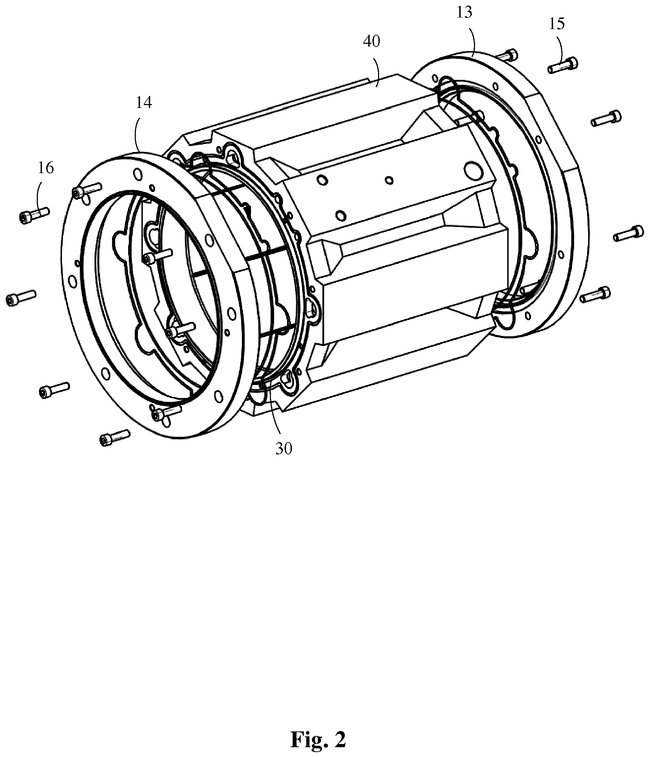

Fig. 1 shows a side view of an electric machine and figure 2 shows an axonometric view of an electric machine.

The electric machine 100 may comprise a longitudinal centre axis X-X, a shaft 10, a rotor 20 attached to a centre portion of the shaft 10, a stator 30 surrounding the rotor 20, and a frame 40 surrounding the stator 30. The rotor 20 and the stator 30 may be cylindrical.

Each end of the shaft 10 may be rotatably supported on a bearing 11, 12. Each bearing 11, 12 may be supported in a bearing house in a respective end plate 13, 14 of the electric machine 100. The end plates 13, 14 may be attached to a respective end of the frame 40.

The rotor 20 may be provided with a rotor winding (not shown in the figure).

The stator 30 may comprise a stator core surrounding the rotor 20. The stator 30 core may be provided with a stator winding. The figure shows only the winding ends 21A of the stator winding.

There is an air gap G1 between the outer surface of the rotor 20 and the inner surface of the stator 30.

The frame 40 may be supported on a support structure R at the installation site of the electric machine 100. The frame 40 may be supported on the support structure R through support feet attached to the outer surface of the frame 40 or through support feet attached to the end plates 13, 14. The support feet may be attached e.g. by welding to the frame 40 or to the end plates 13, 14.

The frame 40 may be attached to the stator 30 with a press-on fit.

The frame 40 has an axial length L1.

The frame 40 may be made of a material suitable to be welded. Suitable materials are e.g. steel and aluminium.

The end plates 13, 14 may be attached with fastening means 15, 16 e.g. screws to the frame 40. The screws 15, 16 may extend in the axial X-X direction through the end plates 13, 14 to the end of the frame 40.

The electric machine 100 can be an electric motor or an electric generator.

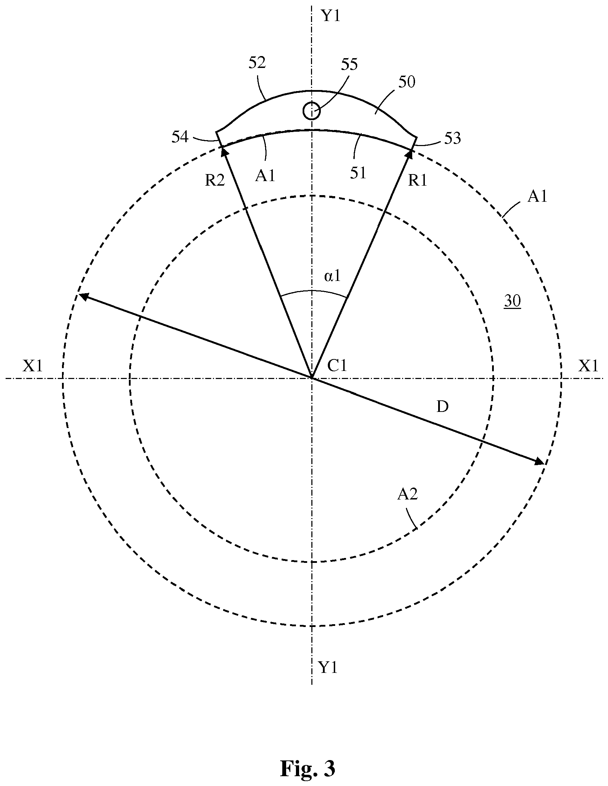

Fig. 3 shows a transverse cross section of a frame of the electric machine.

The outer broken line A1 in the figure represents the outer circumference of the stator core 30 in the electric machine. The inner broken line A2 in the figure represents the inner circumference of the stator core 30 in the electric machine. The outer circumference A1 of the stator core 30 corresponds to the inner circumference of the frame 40 of the electric machine. The figure shows only one frame module 50 of the frame 40. The inner diameter D of the frame 40 is indicated in the figure.

The frame module 50 comprises an inner surface 51 forming an arc coinciding with the inner circumference A1 of the frame 40, an outer surface 52, and two side edges 53, 54 extending between the ends of the inner surface 51 and the outer surface 52. The side edges 53, 54 of the frame module 50 may extend in a radial direction outwards from the circumference A1 of the frame 40. The side edges 53, 54 of the frame module 50 may on the other hand extend in an axial direction X-X along the axial length L1 of the frame 40. The frame module 50 may further comprise at least one axial cooling duct 55 passing through the frame module 50 in the axial direction. The axial cooling duct 55 may be a liquid e.g. water cooling duct.

The outer surface 52 of the frame module 50 may have any suitable form. The outer surface 52 of the frame module 50 may be formed of smooth curves or of angular curves or of a combination of these.

The inner surface 51 of the frame module 50 may be seated against the outer surface of the stator 30.

The frame module 50 may be manufactured by extrusion. Extrusion allows for a free adjustment of the axial length of the frame module 50.

The frame 40 comprises in this embodiment eight identical frame modules 50. Adjacent frame modules 50 may be attached to each other by welding the opposite side edges 53, 54 of the frame modules 50 together along the axial length of the side edges 53, 54 of the frame modules 50. A uniform frame 40 may thus be formed of several frame modules 50.

An angle **α**1 between a first radius R1 extending from a centre C1 of the inner circumference A1 of the frame 40 to a first side edge 53 of the frame module 50 and a second radius R2 extending from the centre C1 of the inner circumference A1 of the frame 40 to a second side edge 54 of the frame module 50 is thus 45 degrees. The centre C1 of the frame 40 coincides with the centre of the electric machine. The centre of the frame 40 is situated on the longitudinal centre axis X-X of the electric machine.

The figure shows also a horizontal centre line X1-X1 of the cross section of the frame 40 and a vertical centre line Y1-Y1 of the cross section of the frame 40.

The inner diameters of frames 40 for electric machines according to the International Electrotechnical Commission (IEC) frame size standard form nearly an arithmetic series. The inner diameters of e.g. IEC frames 160, 180, 200 can be characterized with the following equation D = 20 * N, where N = 8 for IEC 160, N = 9 for IEC 180 and N = 10 for IEC 200.

The frame 40 is manufactured from frame modules 50 so that 8 modules 50 are used for IEC frame 160, 9 modules 50 for IEC frame 180 and 10 modules for IEC 200.

The length of the inner circumference of the frame 40 is CF = π * D = π * 20 * N. The arc length of the inner surface 51 of one module 50 in the frame 40 when N modules are used to form the frame 40 is thus π * 20 [mm].

The frame modules 50 are welded together along the axially extending side edges 53, 54 of the frame modules 50. The curvature of the inner surface 51 of the arc-shaped frame modules 50 will not initially match the circumference of the stator opening. Machining allowance may therefore be added to the profile of the frame module 50. The welded frame 40 is then finally machined in order to achieve a desired circular inner opening of the frame 40.

The axial cooling ducts 55 may be connected together at each end of the frame 40. This may be done by machining grooves in a circumferential direction between adjacent cooling ducts 55 at the ends of the frame 40. Another possibility would be to attach an end flange to each end surface of the frame 40. The end flange could comprise a circumferential cooling fluid groove machined into the end surface of the end flange that will seat against the end of the frame 40. The circumferential centre line of the cooling fluid groove in the end frame may correspond to the circumferential centre line connecting the centres of the axial ducts 55 at the end of the frame 40. There could further be a radial inlet fluid passage from the radial outer surface of one end flange into the cooling fluid groove in said end flange. There could further be a radial outlet fluid passage from the radial outer surface of the other end plate into the cooling fluid groove in said end flange. Circumferential seals radially at both sides of the cooling fluid groove could be arranged in order to seal the end flange to the end of the frame 40.

The fluid inlet passage and the fluid outlet passage could on the other hand be arranged through a frame module 50. There could be an axial fluid inlet duct passing from a first end of the frame module 50 only a short distance towards the second end of the frame module 50. A radial bore could extend from the outer surface of the frame module 50 to the end of the axial inlet fluid duct. A coupling piece could be screwed into the radial bore forming a connection for the inlet for cooling fluid to the machine. There could further be an axial fluid outlet duct passing from a second end of the frame module 50 only a short distance towards the first end of the frame module 50. A radial bore could extend from the outer surface of the frame module 50 to the end of the axial outlet fluid duct. A coupling piece could be screwed into the radial bore forming a connection for the outlet for cooling fluid from the machine.

The frame of the electric machine is produced by a method comprising
producing frame modules 50 having an arc-shaped inner surface 51, the frame modules 50 extending in the axial direction X-X over a length L1 of the frame 40 and in the circumferential direction A over a portion of the circumference of the frame 40, each frame module 50 comprising at least one axial cooling duct 55 passing in the axial direction through the frame module 50,
positioning frame modules 50 adjacent to each other so that the arc-shaped inner surface 51 of the frame module 50 seats on an inner circumference A1 of the frame 40,
welding adjacent frame modules 50 to each other from the edges 53, 54 of the frame modules 50 in order to form a continuous circular frame 40,
machining an inner surface of the frame 40 in order to achieve a circular inner opening of a desired diameter in the frame 40, whereby
an inner diameter of the frame (40) is characterized with the following equation D = 20 * N, where N = 8 for a frame size IEC 160, N = 9 for a frame size IEC 180 and N = 10 for a frame size IEC 200 etc and wherein an arc-length (A1) of the arc-shaped inner surface (51) of the frame module (50) is π * 20 mm.

The electric machine may be a liquid cooled electric machine. The liquid may be e.g. water or oil.

It will be obvious to a person skilled in the art that, as the technology advances, the inventive concept can be implemented in various ways. The invention and its embodiments are not limited to the examples described above but may vary within the scope of the claims.

## Claims

1. A method for producing a frame of an electric machine, the method comprising
producing frame modules (50) having an arc-shaped inner surface (51), the frame modules (50) extending in the axial direction (X-X) over a length (L1) of the frame (40) and in the circumferential direction (A) over a portion of the circumference of the frame (40), each frame module (50) comprising at least one axial cooling duct (55) passing in the axial direction through the frame module (50),
determining the IEC frame number to be produced,
determining N, where N = 8 for a frame size IEC 160, N = 9 for a frame size IEC 180 and N = 10 for a frame size IEC 200, etc...,
positioning N identical frame modules (50) adjacent to each other so that the arc-shaped inner surface (51) of the frame modules (50) seats on an inner circumference (A1) of the frame (40),
welding adjacent frame modules (50) to each other from the edges (53, 54) of the frame modules (50) by welding the opposite side edges (53, 54), in the circumferential direction, of adjacent frame modules (50) together along the axial length of the side edges (53, 54) of the frame modules (50) in order to form a continuous circular frame (40),
machining an inner surface of the frame (40) in order to achieve a circular inner opening of a desired diameter in the frame (40),
whereby an inner diameter of the frame (40) is determined according to the following equation D = 20 * N mm and wherein an arc-length (A1) of the arc-shaped inner surface (51) of the frame modules (50) is π * 20 mm.

2. A frame for an electric machine manufactured according to the method of claim 1.

3. The frame according to claim 2, wherein the axial cooling ducts (55) are connected at each axial (X-X) end of the frame (40) with a circumferential groove at the axial (X-X) end of the frame (40).

4. An electric machine comprising a frame (40) according to any of claims 2 to 3

5. The electric machine according to claim 4 wherein the electric machine comprises a rotor (20) and a stator (30) surrounding the rotor (20), the frame surrounding the stator (30).

6. The electric machine according to claim 5 wherein the rotor (20) and the stator (30) has a cylindrical shape.

## Patentansprüche

1. Verfahren zum Herstellen eines Rahmens einer elektrischen Maschine, wobei das Verfahren umfasst
Herstellen von Rahmenmodulen (50), die eine bogenförmige Innenfläche (51) aufweisen, wobei sich die Rahmenmodule (50) in der axialen Richtung (X-X) über eine Länge (L1) des Rahmens (40) und in der Umfangsrichtung (A) über einen Teil des Umfangs des Rahmens (40) erstrecken, wobei jedes Rahmenmodul (50) mindestens einen axialen Kühlkanal (55) umfasst, der in der axialen Richtung durch das Rahmenmodul (50) verläuft,
Bestimmen der herzustellenden IEC-Rahmennummer, Bestimmen von N, wobei N = 8 für eine Rahmengröße IEC 160, N = 9 für eine Rahmengröße IEC 180 und N = 10 für eine Rahmengröße IEC 200 usw...,
Positionieren von N identischen Rahmenmodulen (50) angrenzend aneinander derart, dass die bogenförmige Innenfläche (51) der Rahmenmodule (50) an einem Innenumfang (A1) des Rahmens (40) anliegt,
Schweißen von angrenzenden Rahmenmodulen (50) aneinander von den Kanten (53, 54) der Rahmenmodule (50) durch Zusammenschweißen der in der Umfangsrichtung gegenüberliegenden Seitenkanten (53, 54) von angrenzenden Rahmenmodulen (50) entlang der axialen Länge der Seitenkanten (53, 54) der Rahmenmodule (50), um einen durchgehenden kreisförmigen Rahmen (40) auszubilden,
Bearbeiten einer Innenfläche des Rahmens (40), um eine kreisförmige innere Öffnung eines gewünschten Durchmessers in dem Rahmen (40) zu erhalten,
wobei ein Innendurchmesser des Rahmens (40) gemäß der folgenden Formel D = 20 * N mm bestimmt wird und wobei eine Bogenlänge (A1) der bogenförmigen Innenfläche (51) der Rahmenmodule (50) π * 20 mm beträgt.

2. Rahmen für eine elektrische Maschine, der gemäß dem Verfahren nach Anspruch 1 hergestellt ist.

3. Rahmen nach Anspruch 2, wobei die axialen Kühlkanäle (55) an jedem axialen (X-X) Ende des Rahmens (40) mit einer Umfangsnut an dem axialen (X-X) Ende des Rahmens (40) verbunden sind.

4. Elektrische Maschine, die einen Rahmen (40) nach einem der Ansprüche 2 bis 3 umfasst.

5. Elektrische Maschine nach Anspruch 4, wobei die elektrische Maschine einen Rotor (20) und einen Stator (30), der den Rotor (20) umgibt, umfasst, wobei der Rahmen den Stator (30) umgibt.

6. Elektrische Maschine nach Anspruch 5, wobei der Rotor (20) und der Stator (30) eine zylindrische Form aufweist.

## Revendications

1. Procédé de production d'une carcasse d'une machine électrique, le procédé comprenant :
la production de modules de carcasse (50) ayant une surface interne en forme d'arc (51), les modules de carcasse (50) s'étendant dans la direction axiale (X-X) sur une longueur (L1) de la carcasse (40) et dans la direction circonférentielle (A) sur une partie de la circonférence de la carcasse (40), chaque module de carcasse (50) comprenant au moins un conduit de refroidissement coaxial (55) passant dans la direction axiale à travers le module de carcasse (50),
la détermination du numéro de carcasse IEC à produire,
la détermination de N, dans lequel N = 8 pour une taille de carcasse IEC de 160, N = 9 pour une taille de carcasse IEC de 180 et N = 10 pour une taille de carcasse IEC de 200, etc.,
le positionnement de N modules de carcasse identiques (50) adjacents les uns aux autres de façon que la surface interne en forme d'arc (51) des modules de carcasse (50) soit assise sur une circonférence interne (A1) de la carcasse (40),
le soudage de modules de carcasse adjacents (50) les uns aux autres à partir des bords (53, 54) des modules de carcasse (50) par le soudage conjoint des bords latéraux opposés (53, 54), dans la direction circonférentielle, de modules de carcasse adjacents (50) le long de la direction axiale des bords latéraux (53, 54) des modules de carcasse (50) afin de former une carcasse circulaire continue (40),
l'usinage d'une surface interne de la carcasse (40) afin d'obtenir une ouverture interne circulaire d'un diamètre souhaité dans la carcasse (40),
dans lequel un diamètre interne de la carcasse (40) est déterminé selon l'équation suivante D = 20*N mm et dans lequel une longueur d'arc (A1) de la surface interne en forme d'arc (51) des modules de carcasse (50) est égale à n*20 mm.

2. Carcasse pour une machine électrique fabriquée selon le procédé de la revendication 1.

3. Carcasse selon la revendication 2, dans laquelle les conduits de refroidissement axiaux (55) sont reliés à chaque extrémité axiale (X-X) de la carcasse (40) par une rainure circonférentielle à l'extrémité axiale (X-X) de la carcasse (40).

4. Machine électrique comprenant une carcasse (40) selon l'une quelconque des revendications 2 à 3.

5. Machine électrique selon la revendication 4, dans laquelle la machine électrique comprend un rotor (20) et un stator (30) entourant le rotor (20), la carcasse entourant le stator (30).

6. Machine électrique selon la revendication 5, dans laquelle le rotor (20) et le stator (30) ont une forme cylindrique.
